(19) Europäisches Patentamt
European Patent Office
Office européen des brevets

(11) **EP 4 503 417 A1**

(12) **EUROPEAN PATENT APPLICATION**
published in accordance with Art. 153(4) EPC

(43) Date of publication:
**05.02.2025 Bulletin 2025/06**

(21) Application number: **23779211.4**

(22) Date of filing: **02.03.2023**

(51) International Patent Classification (IPC):
***H02M 3/155*** (2006.01)

(52) Cooperative Patent Classification (CPC):
**H02M 3/155**

(86) International application number:
**PCT/JP2023/007868**

(87) International publication number:
**WO 2023/189182 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022060067**

(71) Applicant: **DENSO CORPORATION**
**Kariya-city, Aichi 448-8661 (JP)**

(72) Inventors:
• **TOMITA, Kenji**
**Nisshin-city, Aichi 4700111 (JP)**
• **AOKI, Yasuaki**
**Kariya- city, Aichi 4488661 (JP)**
• **UEDA, Yusuke**
**Kariya- city, Aichi 4488661 (JP)**
• **SHIMIZU, Takahiro**
**Kariya- city, Aichi 4488661 (JP)**
• **KITAMURA, Nobuyuki**
**Toyota-shi, Aichi 471-8571 (JP)**

(74) Representative: **TBK**
**Bavariaring 4-6**
**80336 München (DE)**

(54) **DC-DC CONVERTER CONTROL DEVICE AND PROGRAM**

(57) A control apparatus (40) for a DC-to-DC converter (20) includes a switching controller working to selectively perform a first control task and a second control task. The first control task is to control on-off operations of switching devices (21A, 21B) of the DC-to-DC converter not to have at least one of an all-on period and an all-off period. The all-on period being a period of time in which all the switching devices are turned on. The all-off period is a period of time in which all the switching devices are turned off. The second control task is to control the on-off operations of the switching devices to have both the all-on period and the all-off period. The switching controller works to change the first control task to the second control task before a current mode is switched from a continuous current mode to a discontinuous current mode.

FIG.1

EP 4 503 417 A1

**Description**

CROSS REFERENCE TO RELATED DOCUMENT

The present application claims the benefit of priority of Japanese Patent Application No. 2022-060067 filed on March 31, 2022, the disclosure of which is incorporated in its entirety herein by reference.

Technical Field

This disclosure relates generally to a control apparatus for a DC-to-DC converter and a program.

BACKGROUND ART

The international publication WO-A1-2020/095432 teaches a controller for a DC-to-DC converter equipped with a plurality of reactors. The reactors are magnetically coupled with each other through a core. The controller selectively works in an interleaving operation and an in-phase operation to control on-off operations of switching devices connecting with ends of the reactors. The interleaving operation is to drive the switching devices 180° out of phase with each other. The in-phase operation is to control the switching operations of the switching devices to be in phase with each other.

PRIOR ART DOCUMENT

PATENT LITERATURE

FIRST PATENT LITERATURE : International Publication WO-A1-2020/095432

SUMMARY OF THE INVENTION

The above-described controller works to control a duty cycle of a drive signal outputted to each of the switching devices to bring an amount of electrical current flowing through a corresponding one of the reactors into agreement with a target value. There is, however, a risk that the controllability to use the duty cycle to control the amount of electrical current flowing through each of the reactors may be degraded in a discontinuous current mode during the interleaving operation.
It is an object of this disclosure to provide a control apparatus and a program for a DC-to-DC converter equipped with magnetic coupling reactors to improve controllability to control electrical currents flowing through the reactors.
According to one aspect of this disclosure, there is provided a control apparatus for a DC-to-DC converter which includes a plurality of reactors which are magnetically coupled with each other and switching devices each of which is connected to an end of a corresponding one of the reactors. The control apparatus comprises a switching controller which works to selectively perform a first control task and a second control task. The first control task is to control on-off operations of the switching devices not to have at least one of an all-on period and an all-off period. The all-on period is a period of time in which all the switching devices are turned on. The all-off period is a period of time in which all the switching devices are turned off. The second control task is to control the on-off operations of the switching devices to have both the all-on period and the all-off period. The switching controller works to change the first control task to the second control task before a current mode is switched from a continuous current mode to a discontinuous current mode.
When the continuous current mode is changed to the discontinuous current mode during execution of the first control task, the controllability to control the amount of electrical current flowing through reach of the reactors may be, as described below in detail, lowered.
When the discontinuous current mode has been entered during execution of the first control task, and electrical current is flowing through one of the reactors which connects with a corresponding one of the switching devices which is turned on, no electrical current may flow through the reactors connecting with the switching devices turned off. In this situation, switching of one of the switching devices to the off-state will result in a decrease in amount of electrical current flowing through the reactor connecting with the one of the switching devices changed to the off-state. Such a decrease causes a counterflow of electrical current to appear in the reactors through which no electrical current was flowing before because the reactors are magnetically coupled with each other. In such a case, it is impossible to increase or decrease the duty cycle for each of the switching devices to control the amount of electrical current flowing through a corresponding one of the reactors.
The control apparatus in this disclosure is, as described above, designed to change the first control task to the second control task before the current mode is switched from the continuous current mode to the discontinuous current mode. In the second control task, even when the discontinuous current mode is entered, counterflows of electrical current through the reactors are reduced more than in the first control task. The control apparatus in this disclosure is, therefore, capable of improving the controllability to control the amounts of electrical current flowing through the reactors.

BRIEF DESCRIPTION OF THE DRAWINGS

The above-described object, other objects, features, or beneficial advantages in this disclosure will be apparent from the following detailed discussion with reference to the drawings.
In the drawings:

Fig. 1 is a structural view of a DC-to-DC converter according to the first embodiment;
Figs. 2(A), 2(B), and 2(C) are views which demonstrate on-off states of switching devices and time-series changes in electrical current flowing through reactors in a first control task;
Fig. 3 is a graph which represents ranges where a continuous current mode and a discontinuous current mode are entered in a first control task;
Fig. 4 is a graph which represents a relation between a reactor current and a duty cycle when a continuous current mode is changed to a discontinuous current mode during execution of a first control task;
Fig. 5 is a flowchart of a program or a sequence of steps to execute a switching operation in the first embodiment;
Figs. 6(A), 6(B), and 6(C) are views which show equivalent circuits of magnetically coupled reactors;
Figs. 7(A), 7(B), and 7(C) are views which demonstrate time-series changes in reactor currents when a duty cycle is less than or equal to 0.5 and on-off states of switching devices in a first control task;
Figs. 8(A), 8(B), and 8(C) are views which demonstrate time-series changes in reactor currents when a duty cycle is more than or equal to 0.5 and on-off states of switching devices in a first control task;
Figs. 9(A), 9(B), and 9(C) are views which demonstrate time-series changes in reactor currents and on-off states of switching devices in a second control task;
Fig. 10 is a graph which represents an upper threshold value and a lower threshold value used in the first embodiment;
Fig. 11 is a view which demonstrates a relation between a first control task and a second control task in the first embodiment;
Fig. 12 is a graph which represents a relation of a reactor current and a duty cycle when a continuous current mode in a first control task is switched to a discontinuous current mode in a second control task;
Figs. 13(A) and 13(B) are graphs which show degrees of followability of reactor currents;
Figs. 14(A) and 14(B) are graphs each of which represents an upper threshold value and a lower threshold value in a first modification of the first embodiment;
Fig. 15 is a flowchart of a program or a sequence of steps to execute a switching operation in a second modification of the first embodiment;
Fig. 16 is a flowchart of a program or a sequence of steps to execute a switching operation in a third modification of the first embodiment;
Fig. 17 is a view which demonstrates how to switch between a first control task and a second control task in the second embodiment;
Fig. 18 is a graph which represents an upper threshold value and a lower threshold value in the second embodiment;
Figs. 19(A), 19(B), and 19(C) are graphs which represent relations of an upper threshold value and a lower threshold value in modifications of the second embodiment;
Fig. 20 is a view which demonstrates how to switch between a first control task and a second control task in the third embodiment;
Figs. 21(A) and 20(B) are graphs which represent relations of an upper threshold value and a lower threshold value in the third embodiment;

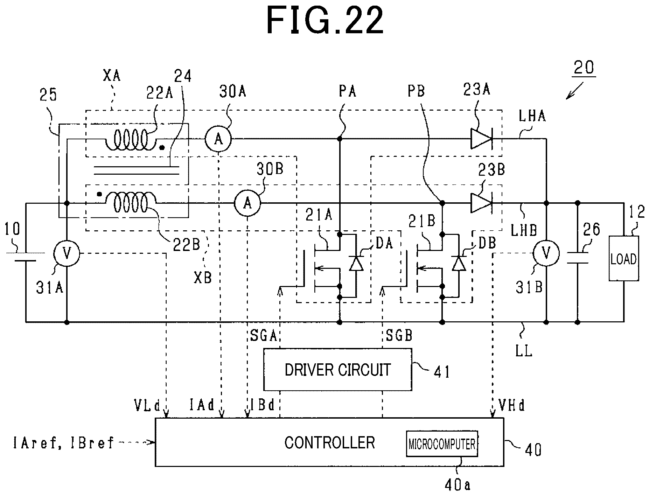

Fig. 22 is a structural view of a DC-to-DC converter in another embodiment;
Figs. 23(A), 23(B), and 23(C) are views which demonstrate sequences of on-off states of switching devices in a first control task in another embodiment; and
Figs. 24(A) and 24(B) are views which demonstrate sequences of on-off states of switching devices in a second control task in another embodiment.

MODE FOR CARRYING OUT THE INVENTION

*FIRST EMBODIMENT*

A control apparatus according to the first embodiment will be described below with reference to the drawings. The control apparatus is implemented by the controller 40 which is installed in vehicle, such as a hybrid vehicle or an electrical vehicle, in which a traction motor is mounted and used for the DC-to-DC converter 20 (which will be simply referred to as converter 20).

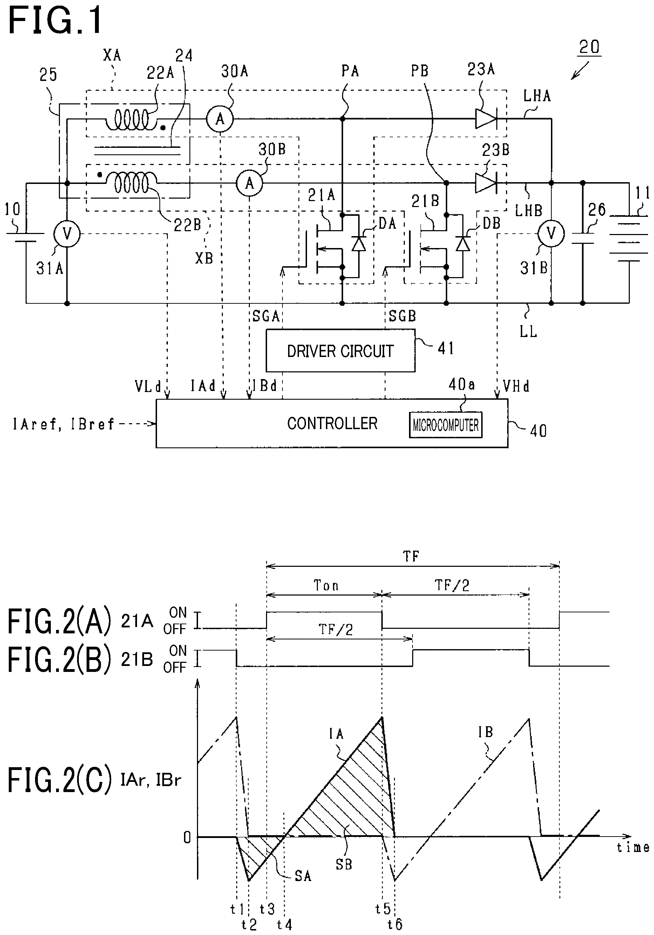

The converter 20, as illustrated in Fig. 1, includes an input unit connecting with the power supply 10 and an output unit connecting with the storage battery 11. The converter 20 works to step-up an input volage supplied from the input unit and output it from the output unit. The power supply 10 is implemented by, for example, a fuel cell which generates electricity using electrochemical reaction. The converter 20 includes a plurality of step-up circuits: the first step-up circuit $XA$ and the second step-up circuit $XB$. The first step-up circuit $XA$ and the second step-up circuit $XB$ work as step-up chopper circuits. The first step-up circuit $XA$ includes the first switching device 21A, the first reactor 22A, and the first diode 23A working as a rectifier. The first switching device 21A is made of an *n*-channel MOSFET.

The positive terminal of the power supply 10 and the positive terminal of the battery 11 are connected together using the first high-potential line $LHA$. The first switching device 21A has a drain connecting with the first high-potential line $LHA$. The power supply 10 has a negative terminal connecting with a negative terminal of the battery 11 using the low-potential line $LL$. The first switching device 21A has a source connecting with the low-potential line $LL$. The first switching device 21A has the body diode $DA$ connecting in reverse-parallel thereto.

The first reactor 22A and the first diode 23A are arranged in the first high-potential line $LHA$. In the first high-potential line $LHA$, the first reactor 22A is located closer to the power supply 10 than a junction (which will also be referred below as the first junction $PA$) of the first reactor 22A and the first switching device 21A is. The first diode 23A is located closer to the battery 11 than the first junction $PA$ is in the first high-potential line $LHA$. The first diode 23A is oriented to have an anode leading to the first junction PA and a cathode leading to the battery 11.

The second step-up circuit $XB$ includes the second switching device 21B, the second reactor 22B, and the second diode 23B working as a rectifier. The second switching device 21B is made of an *n*-channel MOSFET. The power supply 10 has a positive terminal connecting with a positive terminal of the battery 11 using the second high-potential line $LHB$. The second switching device 21B has a drain connecting with the second high-potential line $LHB$. The second switching device 21B also has a source connecting with the low-potential line $LL$. The second switching device 21B, like the first switching device 21A, has the body diode $DB$ connected in reverse parallel thereto.

The second reactor 22B and the second diode 23B are arranged in the second high-potential line $LHB$. In the second high-potential line $LHB$, the second reactor 22B is located closer to the power supply 10 than a junction (which will also be referred to as the second junction $PB$) of the second reactor 22B and the drain of the second switching device 21B is. The second diode 23B is located closer to the battery 11 than the second junction $PB$ is in the second high-potential line $LHB$. The second diode 23B is oriented to have an anode leading to the second junction $PB$ and a cathode leading to the battery 11.

The first reactor 22A and the second reactor 22B are magnetically coupled with each other. Specifically, the first reactor 22A and the second reactor 22B are wound around the core 24 so that they are inversely magnetically coupled to each other. More specifically, the first reactor 22A and the second reactor 22B are wound around the core 24 so that voltage appearing at one of ends of the first reactor 22A which leads to the first junction $PA$ is higher than that at the other of the first reactor 22A leading to the power supply 10, voltage at one of ends of the second reactor 22B which leads to the power supply 10 may be higher than that at the other of the second reactor 22B leading to the second junction $PB$. In this embodiment, a ratio of the number of turns of the first reactor 22A to that of the second reactor 22B is set to one. The first reactor 22A, the second reactor 22B, and the core 24 constitute the magnetic coupling reactor 25.

The converter 20 includes the smoothing capacitor 26. The smoothing capacitor 26 is connected in parallel to the battery 11.

The converter 20 also includes the first current sensor 30A, the second current sensor 30B, the first voltage sensor 31A, and the second voltage sensor 31B. The first current sensor 30A measures a first reactor current $IAr$ flowing through the first reactor 22A in the form of a first current $IAd$. The second current sensor 30B measures a second reactor current $IBr$ flowing through the second reactor 22B in the form of a second current $IBd$. The first voltage sensor 31A measures voltage developed at the power supply 10 in the form of an input voltage $VLd$. The second voltage sensor 31B measures the output voltage VHd that is voltage outputted from the converter 20 to the battery 11. Outputs of the sensors 30A, 30B, 31A, and 31B are inputted to the controller 40 installed in the converter 20.

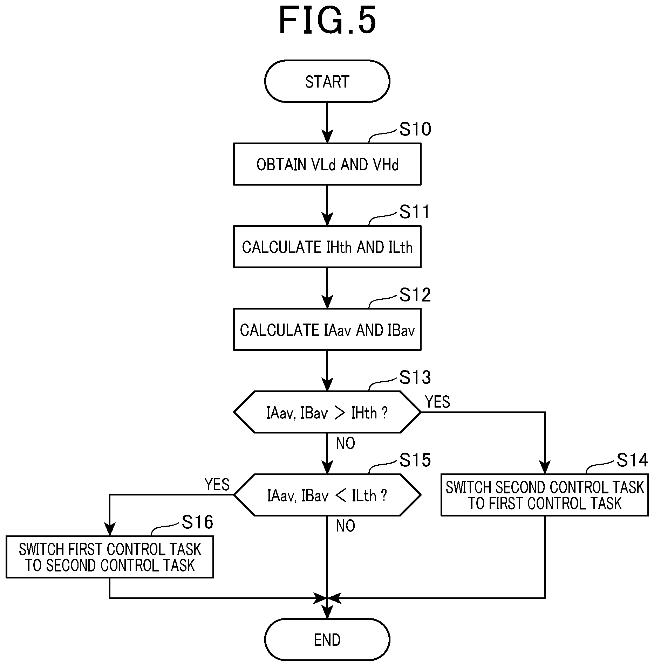

The controller 40 includes the microcomputer 40a. The controller 40 is capable of performing functions realized by software stored in a memory device and a computer (i.e., the microcomputer 40a) executing the software or only by software, hardware, or a combination thereof. For instance, in a case where the controller 40 is provided by an electronic circuit (i.e., hardware), the electronic circuit may include a plurality of digital circuits (i.e., logic circuits) or analog circuits. For instance, the controller 40 is designed to execute a program shown in Fig. 5 which is stored in a non-transitory tangible storage medium that is a storage device installed therein to perform a predetermined task. The storage device installed in the controller 40 may be made of a non-volatile memory. The program retained in the storage device may be altered or updated using a communication network, such as the internet.

The controller 40 obtains measured parameters and perform control tasks using such parameters. Specifically, the controller 40 outputs the first gate signal SGA and the second gate signal SGB through the driver circuit 41 installed in the converter 20. The first gate signal SGA is a drive signal for driving the first switching device 21A. The second switching device 21B is a drive signal for driving the second switching device 21B. The controller 40 uses the first gate signal SGA and the second gate signal SGB to control switching operations of the first and second switching devices 21A and 21B.

The controller 40 selectively performs switching control tasks: a first control task and a second control task to control on-off states of the first switching device 21A and the second switching device 21B. The first control task is to turn on or off the first and second switching devices 21A and 21B in a first control mode where at least one of an all-on period and an all-off period does not appear. The all-on period is a period of time in which both the first and second switching devices 21A and 21B are simultaneously turned on. The all-off period is a period of time in which both the first and second switching devices 21A and 21B are simultaneously turned off. Specifically, the first control task, as demonstrated in Figs. 2(A) and 2(B), establishes a mode of operation of the controller 40 in which on-switching of each of the first and second switching devices 21A and 21B and off-switching of each of the first and second switching devices 21A and 21B both appear one time in the specified cycle $TF$, the on-switching of the second switching device 21B is shifted by $TF/2$ from that of the first switching device 21A, and the off-switching of the second switching device 21B is shifted by $TF/2$ from that of the first switching device 21A. This results in a 180° phase difference between the first reactor current $IAr$ and the second reactor current $IBr$.

The second control task is to turn on or off the first and second switching devices 21A and 21B in a second control mode to have both the all-on period and the all-off period. Specifically, the second control task establishes a mode of operation of the controller 40 in which the on-switching of each of the first and second switching devices 21A and 21B and the off-switching of each of the first and second switching devices 21A and 21B both appear one time in the specified cycle $TF$, and the all-on period and the all-off period appear simultaneously. This results in phases of the first reactor current $IAr$ and the second reactor current $IBr$ being identical with each other.

In each of the first control task and the second control task, an electrical current-flow mode (which will be simply referred to below as a current mode) of each of the first and second reactor currents $IAr$ and $IBr$ is switched between a continuous current mode (CCM) and a discontinuous current mode (DCM). The continuous current mode is a current mode in which the on-off operation of each of the first and second switching devices 21A and 21B is controlled to hold a corresponding one of the first and second reactor currents $IAr$ and $IBr$ from having a value of zero. The discontinuous current mode is a current mode in which the on-off operation of each of the first and second switching devices 21A and 21B is controlled to establish a period of time in which each of the first and second reactor currents $IAr$ and $IBr$ temporarily have a value of zero. The execution of the discontinuous current mode, therefore, causes the electrical current to intermittently flow through the first and second reactors 22A and 22B.

The controller 40 is responsive to the first and second current command values $IAref$ and $IBref$, as inputted form a main controller, to perform an average current control mode to control the on-off states of the first and second switching devices 21A and 21B. Specifically, the controller 40 analyzes the first and second currents $IAd$ and $IBd$ measured by the first and second current sensors 30A and 30B to calculate the first and second average values $IAav$ and $IBav$ that are time averages of levels of the first and second currents $IAd$ and $IBd$ in the specified cycle $TF$. In order to re-calculate the first and second current command values $IAref$ and $IBref$ using the first and second average values $IAav$ and $IBav$ in a feedback mode, the controller 40 calculates the duty cycle $DT$ for each of the first and second switching devices 21A and 21B. The duty cycle DT, as referred to herein, is a ratio of an on-duration $Ton$ of each of the first and second switching devices 21A and 21B to the specified cycle $TF$ (i.e., Ton/TF). In this embodiment, the first current command value $IAref$ and the second current command value $IBref$ are determined to be identical with each other.

Figs. 2(A) to 2(C) represent time-series changes in the first and second reactor currents $IAr$ and $IBr$ in the discontinuous current mode during execution of the first control task. In Fig. 2(C), a solid line indicates a change in the first reactor current $IAr$. A dash-dotted line indicates a change in the second reactor current $IBr$. Before time $t1$, the first switching device 21A is in the off-state, so that the first reactor current $IAr$ is zero. The second switching device 21B is in the on-state, so that the second reactor current $IBr$ gradually increases. When the second switching device 21B is switched to the off-state at time $t1$, it causes the second reactor current $IBr$ to drop rapidly, which results in a change in magnetic flux in the core 24, thereby creating an electromotive force in the first reactor 22A which generates a flow of the first reactor current $IAr$ from the battery 11 toward the power supply 10.

In the first high-potential line LHA in which the first reactor 22A is arranged, the first diode 23A is located closer to the battery 11 than the first reactor 22A is. This blocks a flow of electrical current from the battery 11 to the first reactor 22A. Generation of electromotive force in the first reactor 22A which serves to create a flow of the first reactor current $IAr$ from the battery 11 toward the power supply 10 will, therefore, result in a flow of the first reactor current $IAr$ from the body diode $DA$ of the first switching device 21A toward the first reactor 22A. In other words, the first reactor current $IAr$ flows backward.

The first reactor current $IAr$ decreases for a period of time in which the second reactor current $IBr$ decreases between times $t1$ and $t2$. When time $t2$ is reached, the first reactor current $IAr$ starts to rise at a constant rate. At time $t3$, the first switching device 21A is switched to the on-state. When the first reactor current $IAr$ flows backward at time $t3$, it causes electrical current to flow through the body diode $DA$ in the forward direction, thereby resulting in insufficient voltage difference between the drain and source of the first switching device 21A. The slope of a change in the first reactor current $IAr$, therefore, remains unchanged even though the first switching device 21A is turned on. This causes the first reactor current $IAr$ to rise slowly in the on-duration $Ton$ of the first switching device 21A between times $t3$ and $t5$ at the same rate as that between times $t2$ and $t3$. Specifically, the first reactor current $IAr$ reaches zero at time $t4$ and then becomes maximized at time $t5$. When the first switching device 21A is tuned off at time $t5$, the first reactor current $IAr$ decreases rapidly and becomes zero at time $t6$.

In the above state, a total amount of the first reactor current $IAr$ in the specified cycle $TF$ is kept constant regardless of the duty cycle $DT$. Specifically, the sum of a total mount $SA$, as indicated by hatching in Fig. 2(C), of the first reactor current $IAr$ flowing in the reverse direction between times $t1$ and $t4$ and a total amount $SB$ of the first reactor current $IAr$ flowing in the forward direction between times $t4$ and $t6$ is kept constant regardless of the duty cycle $DT$. This is because when the first switching device 21A is turned on while the first reactor current $IAr$ is flowing in the reverse direction, the slope of a change in the first reactor current $IAr$ between times $t2$ and $t6$, as apparent from Eq. (1) below, has a constant value given as a function the voltage $VL$ at the power supply 10 and inductances $Ls$ of the first and second reactors 22A and 22B.

$$\frac{dIAr}{dt} = \frac{VL}{Ls} \qquad\qquad \text{Eq. (1)}$$

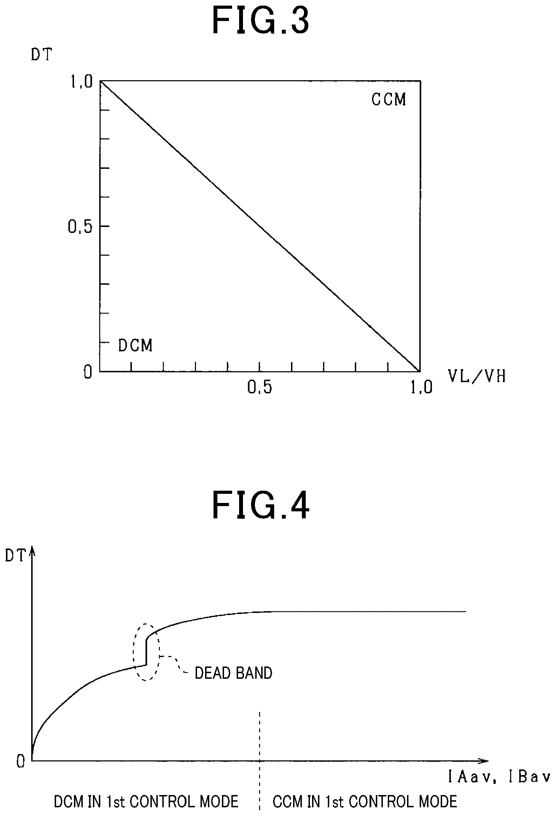

In the discontinuous current mode during execution of the first control task, each the first and second reactor currents $IAr$ and $IBr$, as apparent from the above discussion, transiently flows in the reverse direction. This produces a head band in which each of the first and second average values $IAav$ and $IBav$ remains unchanged even though the duty cycle $DT$ is increased or decreased in response to the backflow of the first and second average value $IAav$ or $IBav$. Fig. 3 demonstrates ranges where the continuous current mode and the discontinuous current mode are entered in the first control tasks which are expressed using the duty cycle $DT$ and an inverse step-up ratio $VL/VH$ that is a reciprocal of a step-up ratio of the converter 20 where $VH$ is voltage outputted to the battery 11. The first control task works to decrease the duty cycle $DT$ with a decrease in each of the current command values $IAref$ and $IBref$ and change the current mode from the continuous current mode to the discontinuous current mode. The entry of the discontinuous current mode produces a dead band.

Fig. 4 represents a relation between each of the first and second average values $IAav$ and $IBav$ and the duty cycle DT when the continuous current mode is switched to the discontinuous current mode in the first control task. The occurrence of a dead band in the discontinuous current mode during execution of the first control task leads to a risk that the followability of the first and second average values $IAav$ and $IBav$ to the first and second current command values $IAref$ and $IBref$ may be deteriorated.

In order to alleviate the above drawback, when the current mode in the converter 20 is required to be switched from the continuous current mode to the discontinuous current mode in response to a decrease in the first reactor current $IAr$ or the second reactor current $IBr$ during execution of the first control task, the controller 40 works to change the first control task to the second control task before the discontinuous current mode is entered.

Fig. 5 illustrates a sequence of steps performed by the controller 40 to execute a switching operation. The switching operation is performed in a given cycle by the converter 20.

After entering the program of Fig. 5, the routine proceeds to step S10 wherein the input voltage $VLd$ measured by the first voltage sensor 31A and the output voltage $VHd$ measured by the second voltage sensor 31B are obtained. The routine proceeds to step S11 wherein the upper threshold value $IHth$ and the lower threshold value $ILth$ are calculated using the input voltage $VLd$ and the output voltage $VHd$ derived in step S10. The lower threshold value $ILth$ is a reference value used to determine whether the current mode is required to be switched from the continuous current mode to the discontinuous current mode during execution of the first control task. The upper threshold value $IHth$ is a reference value used to determine whether the current mode is required to be switched from the discontinuous current mode to the continuous current mode during execution of the first control task.

The routine proceeds to step S12 wherein the first and second average values $IAav$ and $IBav$ are calculated in the manner as described above. The routine proceeds to step S13 wherein it is determined whether the smaller of the first and second average values $IAav$ and $IBav$ calculated in step S12 is greater than the upper threshold value $IHth$. If a YES answer is obtained in step S13, then the routine proceeds to step S14 wherein when the second control task is currently being performed, it is switched to the first control task, while the first control task is now being performed, it is kept as it is. The operation in step S12 serves as an obtainer.

Alternatively, if a NO answer is obtained in step S13, then the routine proceeds to step 15 wherein the smaller of the first and second average values $IAav$ and $IBav$ is lower than the lower threshold value $ILth$. If a NO answer is obtained in step S15, the current switching control task (i.e., the first control task or the second control task) is kept as it is. Alternatively, if a YES answer is obtained in step S15, then the routine proceeds to step S16 wherein when the first control task is now being performed, it is switched to the second control task, while the second control task is now being performed, it is kept as it is. The operations in steps S13 and S15 serve as a determiner. The operations in steps S14 and S16 serve as a switching controller or will also be referred to as a switching operation in this disclosure.

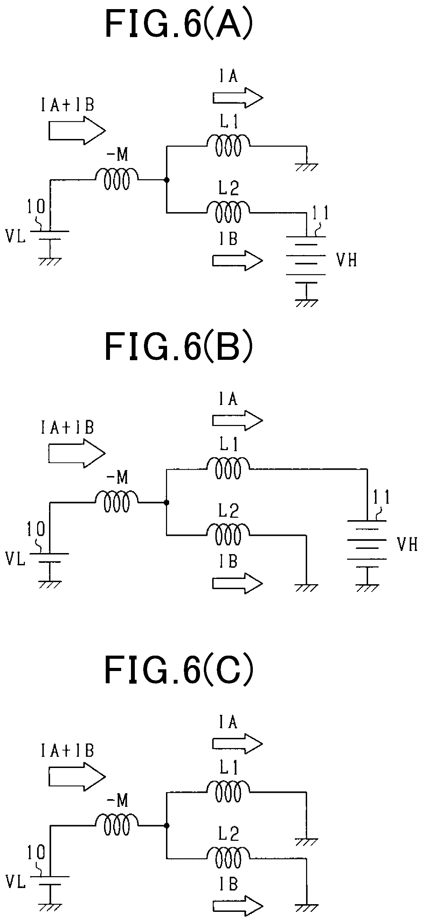

How to determine the upper threshold value $IHth$ and the lower threshold value $ILth$ will be described below with reference to Figs. 6(A) to 10. First, the lower threshold value $ILth$ will be referred to below. Figs. 6(A) to 6(C) show an equivalent circuit of the magnetic coupling reactor 25. Specifically, Fig. 6(A) illustrates the equivalent circuit when the first switching device 21A is turned on, while the second switching device 21B is turned off. Fig. 6(B) illustrates the equivalent circuit when the first switching device 21A is turned off, while the second switching device 21B is tuned on. Fig. 6(C) illustrates the equivalent circuit when the first and second switching devices 21A and 21B are both turned on. In the drawing, $L1$ indicates a self-inductance of the first reactor 22A. $L2$ indicates a self-inductance of the second reactor 22B. M indicates a mutual inductance of the first and second reactors 22A and 22B. The self-inductances $L1$ and $L2$ and the mutual inductance $M$ are given using an inductance $Ls$ and a coupling coefficient $k$ according to Eqs. 2) and 3) below.

$$L1 = L2 = (1 + k) \times Ls \qquad\qquad \text{Eq. (2)}$$

$$M = k \times Ls \qquad\qquad \text{Eq. (3)}$$

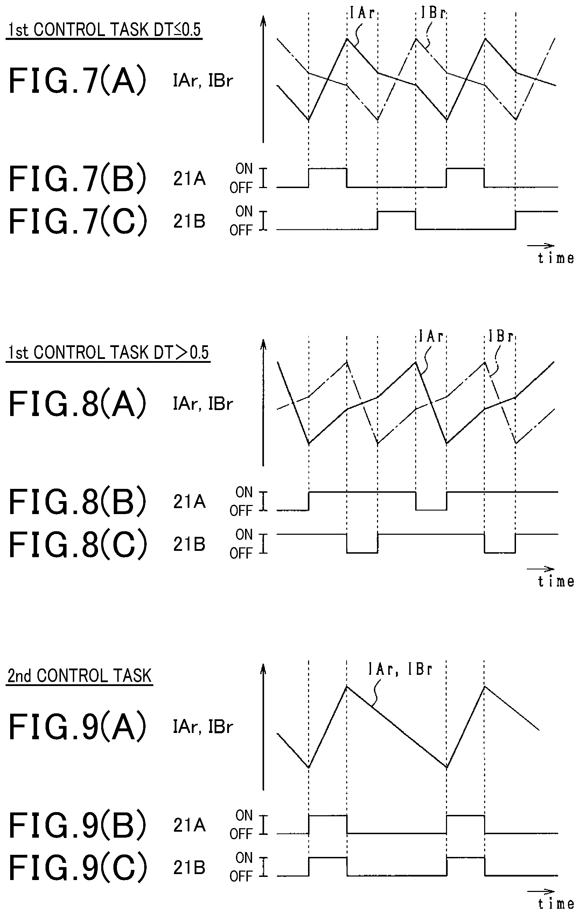

Fig. 7(A) demonstrates time-series changes in the first and second reactor currents $IAr$ and $IBr$ when the duty cycle $DT$ is selected to meet a relation of $DT \leq 0.5$ in the first control task. A solid line represents a change in the first reactor current $IAr$. A dash dotted line represents a change in the second reactor current $IBr$. An equivalent circuit of the magnetic coupling reactor 25 in a period of time in which the first switching device 21A is turn on, while the second switching device 21B is turned off when the duty cycle $DT \leq 0.5$ is identical with that in Fig. 6(A). In this case, the following Eqs. (4) and (5) are met.

$$-M\,\frac{d(IAr)+d(IBr)}{dt} + L1\,\frac{d(IAr)}{dt} = VL \qquad\qquad \text{Eq. (4)}$$

$$-M\,\frac{d(IAr)+d(IBr)}{dt} + L2\,\frac{d(IBr)}{dt} = VL - VH \qquad\qquad \text{Eq. (5)}$$

A change in the first reactor current $IAr$ is defined as $\Delta IA$ $(=d(IA))$. A change in the second reactor current $IBr$ is defined as $\Delta IB$ $(=d(IB))$. Eqs. (4) and (5) are rewritten as Eqs. (6) and (7) below using a relation of $DT \times TF (=dt)$ in a period of time in which the first switching device 21A is turned on, and the second switching device 21B is turned off.

$$-M\,\frac{\Delta IA + \Delta IB}{DT \times TF} + L1\,\frac{\Delta IA}{DT \times TF} = VL \qquad\qquad \text{Eq. (6)}$$

$$-M\,\frac{\Delta IA + \Delta IB}{DT \times TF} + L2\,\frac{\Delta IB}{DT \times TF} = VL - VH \qquad\qquad \text{Eq. (7)}$$

A change $\Delta IA$ in the first reactor current $IAr$ in a period of time in which the first switching device 21A is turned on, and the second switching device 21B is turned off is expressed by Eq. (9) using Eq. (8) shown below. Eq. (8) represents a relation among the inductance $Ls$ of the first and second reactors 22A and 22B, a switching frequency $f (=1/TF)$ and the duty cycle $DT$ of the first and second switching devices 21A and 21B, the voltage $VL$ at the power supply 10, and the volage $VH$ outputted to the battery 11.

$$DT = \frac{VH - VL}{VH} \qquad\qquad \text{Eq. (8)}$$

$$\Delta IA = \frac{-1}{VH \times f \times (1 - \kappa^2) \times Ls}\,(VH - VL)\{\kappa \times VH - (1 + \kappa) \times VL\} \qquad \text{Eq. (9)}$$

Half of the current change $\Delta IA$ represented by Eq. (9) is defined as a first reference value $IX$ represented by Eq. (10) when the duty cycle $DT$ meets a relation of of $DT \leq 0.5$. In the first control task, when the first average value $IAav$ or the second average value $IBav$ drops below the first reference value $IX$, the current mode is changed from the continuous current mode to the discontinuous current mode. In this embodiment, the first reference value $IX$ when the duty cycle $DT$ is lower than or equal to 0.5 is determined as the lower threshold value $ILth$ used when the duty cycle $DT$ is lower than or equal to 0.5.

$$IX = \frac{-1}{2\times VH \times f \times (1-\kappa^2)\times Ls}\ (VH - VL)\{\kappa \times VH - (1 + \kappa) \times VL\}\quad \text{Eq. (10)}$$

Fig. 8(A) represents changes in the first and second reactor currents *IAr* and *IBr* when the duty cycle *DT* meets a relation of *DT* > 0.5 in the first control task. When the duty cycle *DT* greater than 0.5 demonstrated in Figs. 8(A) to 8(C), an equivalent circuit of the magnetic coupling reactor 25 in a period of time in which the first switching device 21A is turn off, while the second switching device 21B is turned on is identical with that in Fig. 6(B). Eqs. (11) and (12) shown below are met which are expressed using a relation of (1-*DT*) × (*TF* (=*dt*)), the change *ΔIA* in the first reactor current *IAr,* and change *ΔIA* in the second reactor current *IBr* in a period of time in which the first switching device 21A is turned off, and the second switching device 21B is turned on.

$$-M\ \frac{\Delta IA + \Delta IB}{(1-DT)\times TF} + L1\ \frac{\Delta IA}{(1-DT)\times TF} = VL - VH \quad\quad \text{Eq. (11)}$$

$$-M\ \frac{\Delta IA + \Delta IB}{(1-DT)\times TF} + L2\ \frac{\Delta IB}{(1-DT)\times TF} = VL \quad\quad \text{Eq. (12)}$$

The change *ΔIA* in the first reactor current *IAr* in a period of time in which the first switching device 21A is turned off, and the second switching device 21B is turned off is expressed according to Eq. (13) below.

$$\Delta IA = \frac{-VL}{VH \times f \times (1-\kappa^2)\times Ls}\ \{VH - (1 + \kappa) \times VL\} \quad\quad \text{Eq. (13)}$$

Half of the current change *ΔIA* represented by Eq. (13) is defined as the first reference value *IX* represented by Eq. (14) when the duty cycle *DT* meets a relation of of *DT* > 0.5. In the first control task, when the first average value *IAav* or the second average value *IBav* drops below the first reference value *IX,* the current mode is changed from the discontinuous current mode to the continuous current mode. In this embodiment, the first reference value *IX* when the duty cycle *DT* is greater than 0.5 is determined as the lower threshold value *ILth* used when the duty cycle *DT* is greater than 0.5.

$$IX = \frac{VL}{2\times VH \times f \times (1-\kappa^2)\times Ls}\ \{VH - (1 + \kappa) \times VL\} \quad\quad \text{Eq. (14)}$$

Next, the upper threshold value Ihth will be described below. Fig. 9(A) demonstrates changes in the first and second reactor currents *IAr* and *IBr* in the second control task. An equivalent circuit of the magnetic coupling reactor 25 in a period of time, as illustrated in Figs. 9(B) and 9(C), in which the first switching device 21A is turn on, and the second switching device 21B is turned on is represented in Fig. 6(C). Eqs. (15) and (16) shown below are met which are expressed using a relation of (*1-DT*) × (*TF* (=*dt*)), the change *ΔIA* in the first reactor current *IAr,* and change *ΔIA* in the second reactor current *IBr* in a period of time in which the first switching device 21A is turned on, and the second switching device 21B is turned on.

$$-M\ \frac{\Delta IA + \Delta IB}{DT \times TF} + L1\frac{\Delta IA}{DT \times TF} = VL \quad\quad \text{Eq. (15)}$$

$$-M\ \frac{\Delta IA + \Delta IB}{DT \times TF} + L2\frac{\Delta IB}{DT \times TF} = VL \quad\quad \text{Eq. (16)}$$

The change *ΔIA* in the first reactor current *IAr* in a period of time in which the first switching device 21A is turned off, and the second switching device 21B is turned off is expressed by Eq. (17) below.

$$\Delta IA = \frac{VL \times (VH-VL)}{VH \times f \times (1-\kappa)\times Ls} \quad\quad \text{Eq. (17)}$$

Half of the current change *ΔIA* represented by Eq. (17) is defined as the second reference value *IY* represented by Eq. (18). In the second control task, when the first average value *IAav* or the second average value *IBav* exceeds the second reference value *IY,* the current mode is changed from the discontinuous current mode to the continuous current mode. In this embodiment, the second reference value *IY* is determined as the upper threshold value *IHth*.

$$IY = \frac{VL \times (VH - VL)}{2 \times VH \times f \times (1 - \kappa) \times Ls} \qquad \text{Eq. (18)}$$

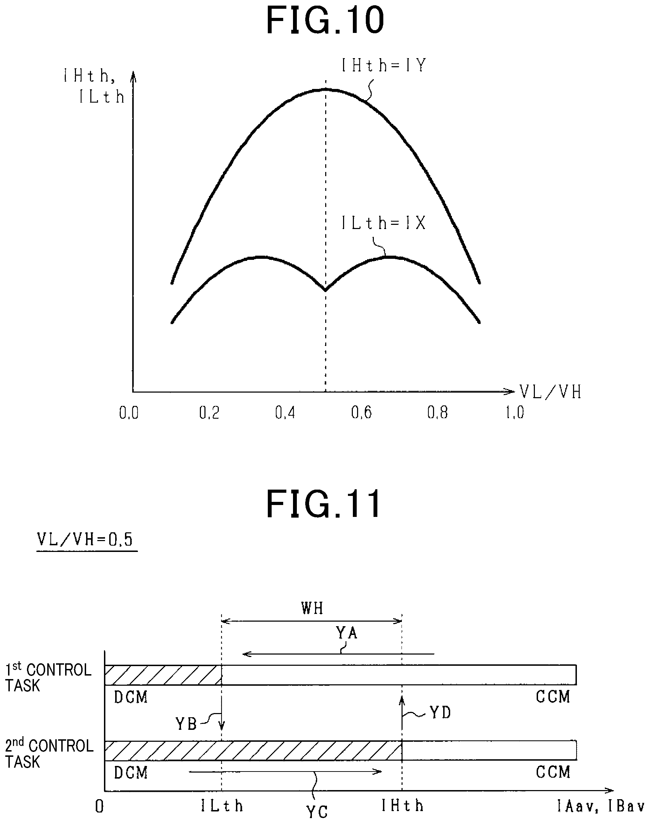

Fig. 10 demonstrates a relation of the upper threshold value *IHth* and the lower threshold value *ILth* to the inverse step-up ratio *VL/VH*. In a region where a relation of $0 < VL/VH \leq 1.0$ is met, the upper threshold value *IHth* is, as can be seen in Fig. 10, determined to be greater than the lower threshold value *ILth*. The upper threshold value *IHth* is maximized when a relation of *VL/VH* = 0.5 is met and decreases with an increase in difference between the inverse step-up ratio *VL/VH* and 0.5. The inverse step-up ratio *VL/VH* has two values when the lower threshold value *ILth* is maximized when $VL/VH \leq 0.5$ and when the lower threshold value *ILth* is maximized when *VL/VH* > 0.5. Specifically, when $VL/VH \leq 0.5$, the lower threshold value *ILth* becomes maximized near *VL / VH* = 0.3 and decreases as it leaves *VL / VH* = 0.3. When *VL / VH* > 0.5, the lower threshold value ILth becomes maximized near *VL / VH* = 0.7 and decreases as it leaves *VL / VH* = 0.7.

How to switch between modes of on-off operations of the first and second switching devices 21A and 21B will be described below with reference to Fig. 11. Fig. 11 demonstrates a current range where the continuous current mode is entered in each of the first and second control tasks when a relation of *VL/VH* = 0.5 is met and a current range where the discontinuous current mode is entered in each of the first and second control tasks when a relation of *VL/VH* = 0.5 is met. When the first average value *IAav* or the second average value *IBav* is determined, as indicated by arrow YA, to drop below the lower threshold value *ILth* due to a decrease in the first or second reactor current *IAr* or *IBr* during execution of the first control task, the modes of on-off operations of the first and second switching devices 21A and 21B are, as indicated by an arrow *YB,* changed from the modes given by the first control task to those given by the second control task. This causes the current mode of the first and second reactor currents *IAr* and *IBr* to be switched to the discontinuous current mode in the second control task before the current mode is switched to the discontinuous current mode in the first control task. In the second control task, the on-off states of the first and second switching devices 21A and 21B are, as described above, controlled to have the first reactor current *IAr* and the second reactor current *IBr* identical in phase with each other. This holds the first and second reactor currents *IAr* and *IBr* from flowing in the reverse direction, thereby eliminating a risk that the dead band may occur.

When the first average value *IAav* or the second average value *IBav* is determined, as indicated by arrow *YC,* to rise above the upper threshold value *IHth* due to an increase in the first or second reactor current *IAr* or *IBr* during execution of the second control task, the modes of on-off operations of the first and second switching devices 21A and 21B are, as indicated by an arrow *YD,* changed from the modes given by the second control task to those given by the first control task. This causes the current mode of the first and second reactor currents *IAr* and *IBr* to be switched to the continuous current mode in the first control task before the current mode is switched to the continuous current mode in the second control task. In the continuous current mode in the second control task, a loss of operation of the converter 20 which arises from ripples of the first and second reactor currents *IAr* and *IBr* is usually greater than that in the continuous current mode in the first control task. In order to eliminate such a loss, the controller 40 works to prevent the continuous current mode from being entered in the second control task to alleviate the adverse effects of the ripples of the first and second reactor currents *IAr* and *IBr.*

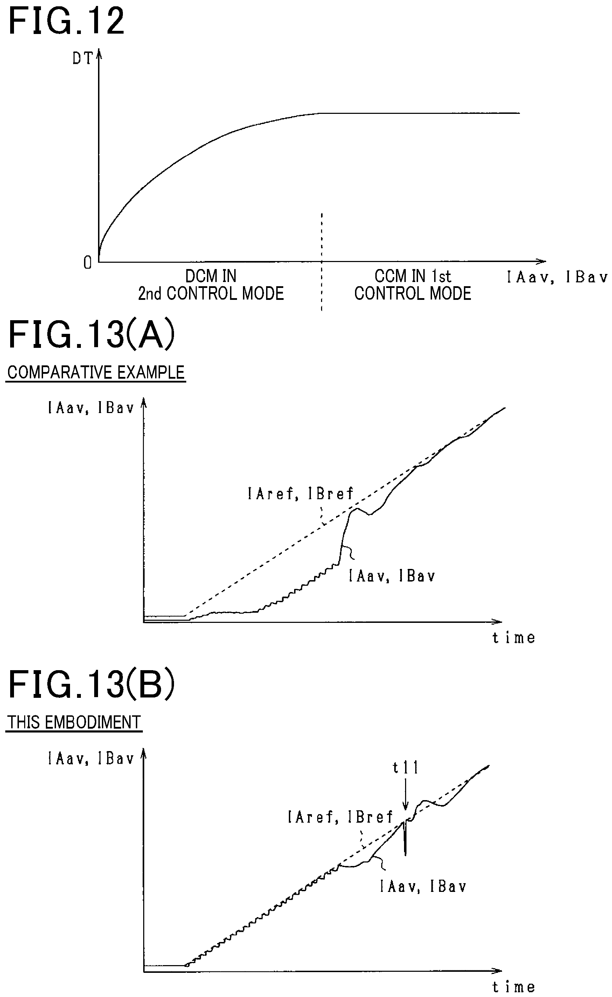

Fig. 12 represents a relation of the first and second average values *IAav* and *IBav* with the duty cycle *DT* when the continuous current mode in the first control task is changed to the discontinuous current mode in the second control task. A risk that the dead band may occur is, as can be seen in Fig. 12, eliminated in the discontinuous current mode in the second control task, thereby enhancing the accuracy in controlling the first and second average values *IAav* and *IBav* using the duty cycle *DT.*

Figs. 13(A) and 13(B) demonstrate the followability of the first and second average values *IAav* and *IBav* in response to moderate changes in the first and second current command values *IAref* and *IBref.* Fig. 13(A) shows the followability of the first and second average values *IAav* and *IBav* in a comparative example wherein the continuous current mode in the first control task is changed to the discontinuous current mode in the first control task. In the comparative example in Fig. 13(A), the occurrence of the dead band results in a great deviation of the first and second average values *IAav* and *IBav* from the first and second current command values *IAref* and *IBref.*

In this embodiment illustrated in Fig. 13(B), the risk of occurrence of the dead band is eliminated, thus ensuring the stability in making the first and second average values *IAav* and *IBav* follow changes in the first and second current command values *IAref* and *IBref.* This enhances the controllability of electrical current in the average current control mode as compared with the comparative example. Time *t11* in Fig. 13(A) is time when the second control task is changed to the first control task.

The above-described embodiment offers the following beneficial advantages.

In this embodiment, the lower threshold value *ILth* is, as can be seen in Fig. 10, determined to be lower than the second reference value *IY.* When the first or second reactor current *IAr* or *IBr* is, as demonstrated in Fig. 11, determined to have dropped below the lower threshold value ILth in the first control task, the controller 40 performs the switching operation to the discontinuous current mode in the second control task. The switching of the current mode after the second control task is entered to the discontinuous current mode, not the continuous current mode, as described above, minimizes a loss of operation of the converter 20 which arises from ripples of the first and second reactor currents $IAr$ and $IBr$.

The switching operation in this embodiment is, as described already, to use the smaller of the first and second average values $IAav$ and $IBav$ to perform switch between the first control task and the second control task. Specifically, when the smaller of the first and second average values $IAav$ and $IBav$ is determined to have drop below the lower threshold value $ILth$, the first control task is changed to the second control task. This prevents the current mode of at least one of the first and second reactor currents $IAr$ and $IBr$ from being switched to the discontinuous current mode during execution of the first control task. Alternatively, when the smaller of the first and second average values $IAav$ and $IBav$ is determined to have exceeded the upper threshold value $IHth$, the second control task is changed to the first control task. This causes the second control task to continue to be performed until the current modes of both the first and second reactor currents $IAr$ and $IBr$ are switched to the continuous current mode during execution of the second control task. This reduces the number of switches between the first control task and the second control task, thereby controlling the deterioration of component parts, such as the first and second switching devices 21A and 21B, of the converter 20.

*FIRST MODIFICATION OF FIRST EMBODIMENT*

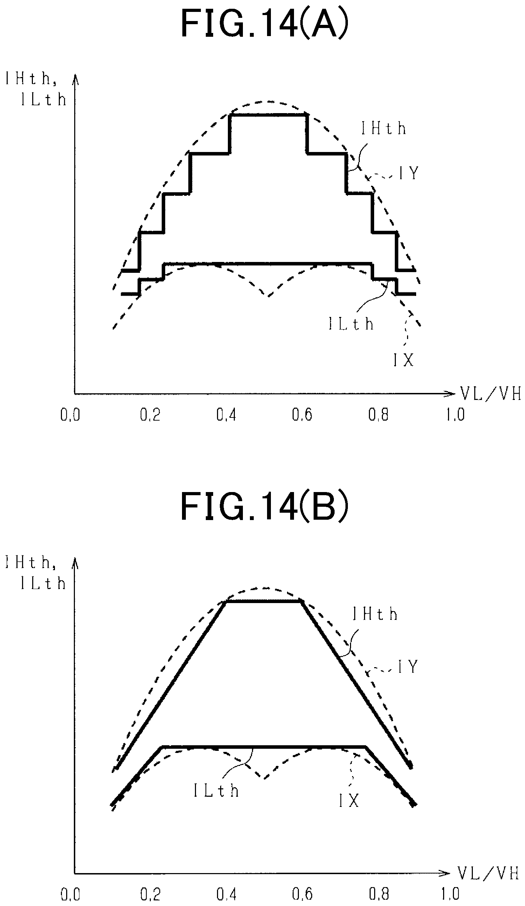

The controller 40 may determine the lower threshold value $ILth$ to have a value intermediate between the first reference value $IX$ and the second reference value $IY$ instead of the first reference value $IX$. The controller 40 may also determine the upper threshold value $IHth$ to have a value intermediate between the lower threshold value $ILth$ and the second reference value $IY$. Specifically, the controller 40 may divide the range of $0<VL/VH<1.0$ into a plurality of sections shown in Fig. 14(A) and determine each of the upper threshold value $IHth$ and the lower threshold value $ILth$ to be constant in each of the sections. Alternatively, the controller 40 may divide the range of $0<VL/VH<1.0$ into a plurality of sections shown in Fig. 14(B) and determine each of the upper threshold value $IHth$ and the lower threshold value $ILth$ to change as a function of a change in the inverse step-up ratio $VL/VH$ in some of the sections. In the example in Fig. 14(B), each of the upper threshold value $IHth$ and the lower threshold value $ILth$ is determined to change in proportional to a change in the inverse step-up ratio $VL/VH$ in the rightmost and leftmost sections of the range. This facilitates the determination of the upper threshold value $IHth$ and the lower threshold value $ILth$ to reduce a load on operation of the controller 40.

*SECOND MODIFICATION OF FIRST EMBODIMENT*

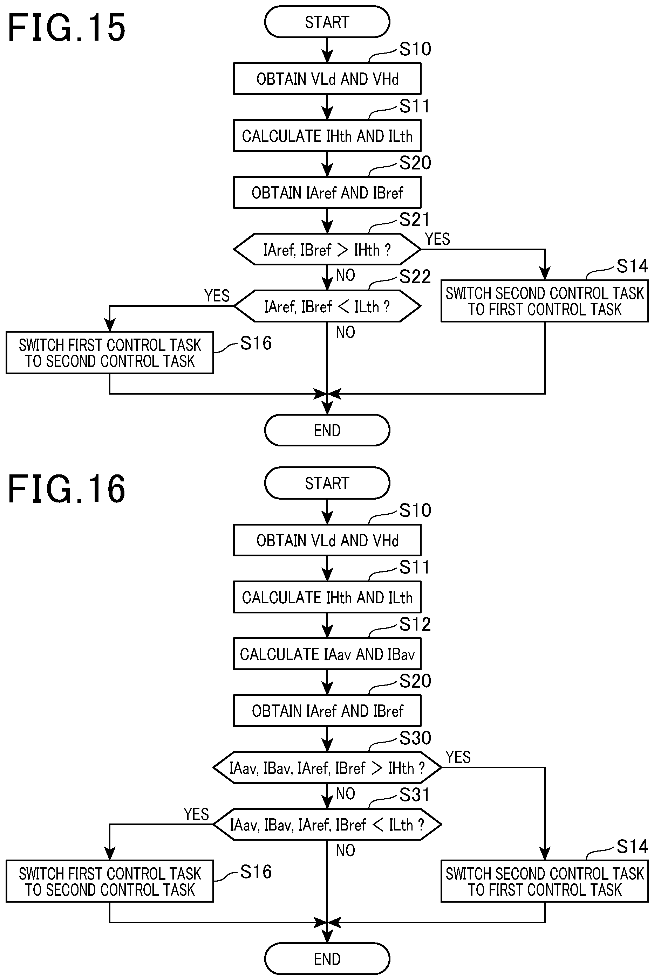

In the switching operation, the controller 40 may use the first and second current command values $IAref$ and $IBref$ instead of the first and second average values $IAav$ and $IBav$ to switch between the first control task and the second control task. Fig. 15 is a flowchart of a sequence of steps to perform the switching operation of the controller 40 in the second modification. The same step numbers as employed in Fig. 5 refer to the same operations, and explanation thereof in detail will be omitted here.

In the switching operation shown in Fig. 15, after the upper threshold value $IHth$ and the lower threshold value $ILth$ are determined in step S11, the routine proceeds to step S20 wherein the first and second current command values $IAref$ and $IBref$ are obtained. The operation in step S20 plays a role as an obtainer.

In step S21, it is determined whether the smaller of the first and second current command values $IAref$ and $IBref$ derived in step S20 is greater than the upper threshold value $IHth$. If a YES answer is obtained in step S21, then the routine proceeds to step S14. Alternatively, if a NO answer is obtained in step S21, then the routine proceeds to step S22 wherein the smaller of the first and second current command values $IAref$ and $IBref$ is lower than the lower threshold value $ILth$. If a NO answer is obtained, the switching operation currently performed is kept as it is. Alternatively, if a YES answer is obtained in step S22, then the routine proceeds to step S16 wherein the first control task is changed to the second control task in the same way as described above in Fig. 5. The use of the first and second current command values $IAref$ and $IBref$ instead of the first and second average values $IAav$ and $IBav$ eliminates the need for calculating the first and second average values $IAav$ and $IBav$, thereby resulting in a decrease in load on the operation of the controller 40.

*THIRD MODIFICATION OF FIRST EMBODIMENT*

In the switching operation, the controller 40 may use the first and second current command values $IAref$ and $IBref$ in addition to the first and second average values $IAav$ and $IBav$ to switch between the first control task and the second control task. Fig. 16 is a flowchart of a sequence of steps to perform the switching operation of the controller 40 in the third modification. The same step numbers as employed in Fig. 5 refer to the same operations, and explanation thereof in detail will be omitted here.

In the switching operation shown in Fig. 16, after the first and second average values $IAav$ and $IBav$ are calculated in step S12, the routine proceeds to step S20 wherein the first and second current command values *IAref* and *IBref* are calculated. The operations in steps S12 and S20 play a role as an obtainer.

After step S20, the routine proceeds to step S30 wherein it is determined whether the smallest of the first and second average values *IAav* and *IBav* derived in step S12 and the first and second current command values *IAref* and *IBref* derived in step S20 is greater than the upper threshold value *IHth*. If a YES answer is obtained in step S30, then the routine proceeds to step S14. Alternatively, if a NO answer is obtained, then the routine proceeds to step S31 wherein it is determined whether the smallest of the first and second average values *IAav* and *IBav* and the first and second current command values *IAref* and *IBref* is lower than the lower threshold value *ILth*. If a NO answer is obtained in step S31, the switching operation currently performed is kept as it is. Alternatively, if a YES answer is obtained in step S31, then the routine proceeds to step S16 wherein the first control task is changed to the second control task in the same way as described above in Fig. 5.

*SECOND EMBODIMENT*

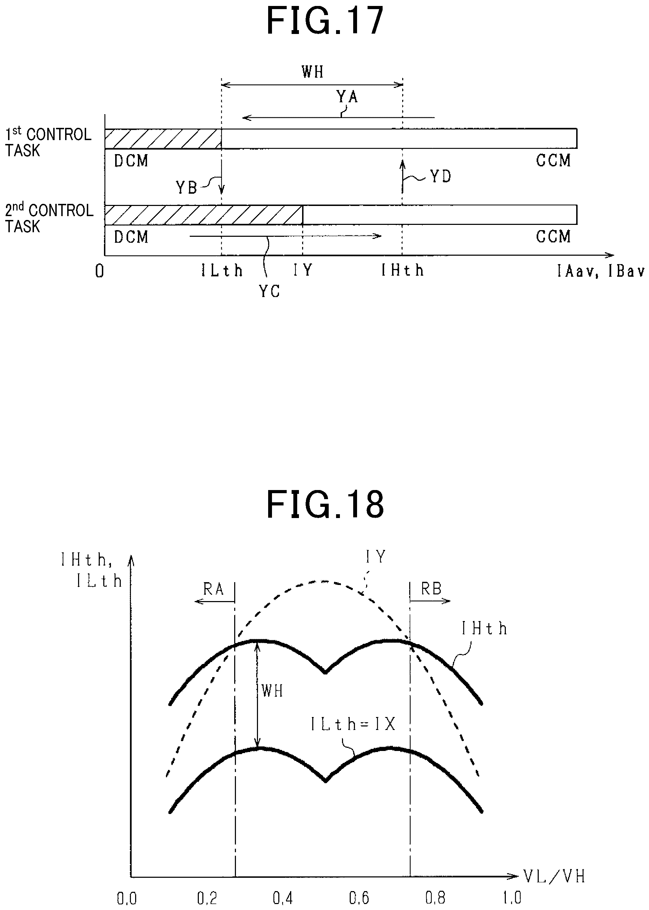

The second embodiment will be described below with reference to Figs. 17 and 18 in terms of differences from the first embodiment. This embodiment is different from the first embodiment in how to determine the upper threshold value *IHth*.

Fig. 17 represents the first reference value *IX* and the second reference value *IY* when a difference between the first reference value *IX* and the second reference value *IY* decreases. Such an event is encountered, for example, when the inverse step-up ratio *VL/VH* becomes equal to 0.2 which is greatly different from 0.5.

In this embodiment, the upper threshold value *IHth* is determined to be higher than the second reference value *IY*. This causes, as can be seen in Fig. 17, the current mode to be switched from the discontinuous current mode to the continuous current mode in the second control task, after which the second control task is changed to the first control task. This causes a hysteresis range *WH* that is a difference between the upper threshold value *IHth* and the lower threshold value *ILth* to be widened more than when the upper threshold value *IHth* is set to the second reference value *IY*. This reduces the number of switches between the first control task and the second control task, thereby decreasing the deterioration of component parts, such as the first and second switching devices 21A and 21B, of the converter 20.

Fig. 18 represents a relation of the upper threshold value *IHth* and the lower threshold value *ILth* to the inverse step-up ratio *VL/VH* in this embodiment. The lower threshold value ILth is, like in the first embodiment, set to the first reference value *IX*, while the upper threshold value *IHth* is set to a value greater than the first reference value *IX* by the hysteresis range *WH*. The hysteresis range *WH* is determined to be a value which minimizes an increase in number of on-off operations of the first and second switching devices 21A and 21B. For example, the hysteresis range *WH* is set to an intermediate value in a range where a difference between the first reference value *IX* and the second reference value *IY* changes within a range of $0 < VL/VH \le 1.0$. This causes the upper threshold value *IHth* to be greater than the first reference value *IX* in a portion(s) of the range of $0 < VL/VH \le 1.0$. The hysteresis range *WH*, therefore, becomes greater than a difference between the first reference value *IX* and the second reference value *IY* in ranges RA and RB where the upper threshold value *IHth* is higher than the first reference value *IX*.

*MODIFICATIONS OF SECOND EMBODIMENT*

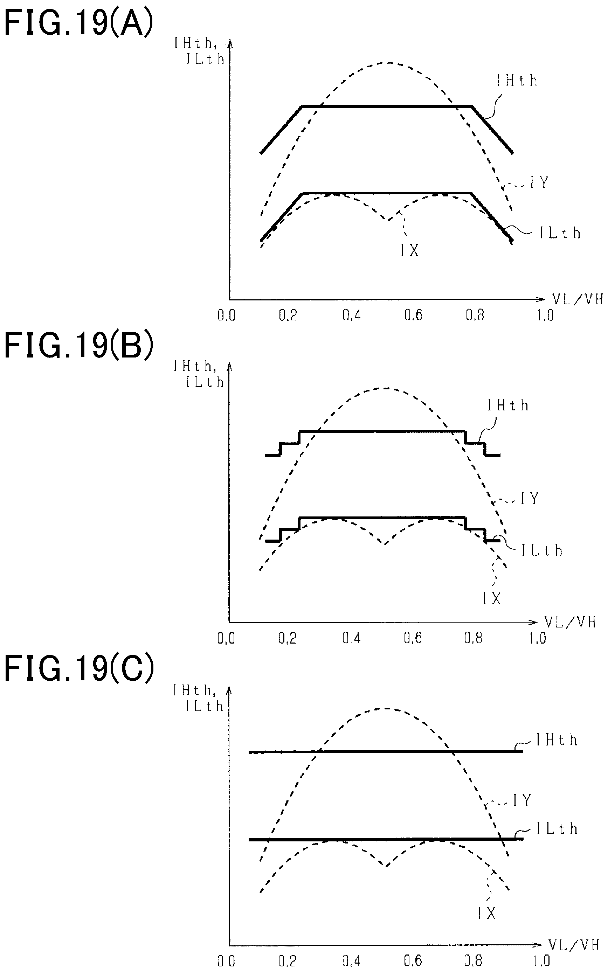

The controller 40 may determine the lower threshold value *ILth* to be a value intermediate between the first reference value *IX* and the second reference value *IY*. For instance, the controller 40, as demonstrated in Fig. 19(A), divides the range of $0 < VL/VH \le 1.0$ into a plurality of sections and sets the upper threshold value *IHth* and the lower threshold value *ILth* to be constant in each of the sections. The controller 40 may alternatively, as illustrated in Fig. 19(B), divide the range of $0 < VL/VH \le 1.0$ into a plurality of sections and determine the upper threshold value *IHth* and the lower threshold value *ILth* to change as a function of a change in the inverse step-up ratio *VL/VH* in one or more of the sections. The controller 40 may also determine the lower threshold value *ILth* to be greater than the second reference value *IY* in a portion(s) of the range of $0 < VL/VH \le 1.0$. In this case, the controller 40 may, as illustrated in Fig. 19(C), determine the lower threshold value *ILth* to be constant in the range of $0 < VL/VH \le 1.0$. This further facilitates how to determine the upper threshold value *IHth* and the lower threshold value *ILth*, thereby resulting in a decrease in load on the operation of the controller 40.

*THIRD EMBODIMENT*

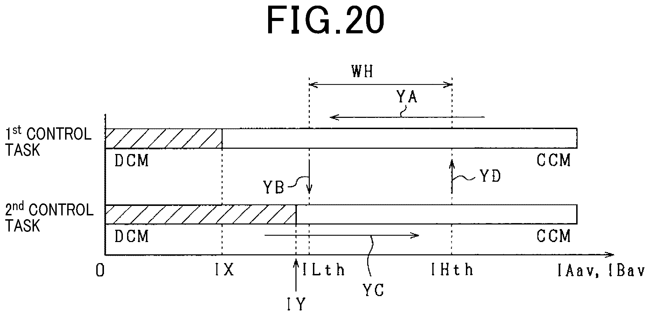

The third embodiment will be described below with reference to Figs. 20 to 21(B) in terms of differences from the second embodiment. This embodiment is different from the second embodiment in how to determine the lower threshold value *ILth*.

Fig. 20 represents the upper threshold value *IHth* and the lower threshold value *ILth* determined in this embodiment. The lower threshold value *ILth* is determined to be greater than the second reference value *IY*. A decrease in the first or second reactor current *IAr* or *IBr* during execution of the first control task, therefore, causes, as illustrated in Fig. 20, the first control task to be switched to the second control task in which the continuous current mode is entered, thereby minimizing a change in current mode which arises from switch from the first control task to the second control task.

When the current mode of the first and second reactor currents *IAr* and *IBr* is changed between the continuous current mode and the discontinuous current mode, it causes overcurrent to temporarily appear in the first and second reactor currents *IAr* and *IBr* due to a difference in how to calculate the first and second average values *IAav* and *IBav* between the continuous current mode and the discontinuous current mode. An increase in number of switches between the continuous current mode and the discontinuous current mode, therefore, results in a drawback that accelerates the deterioration of component parts, such as the first and second switching devices 21A and 21B, of the converter 20. This embodiment, as apparent from the above discussion, works to decrease the number of changes in the current mode when the first control task is switched to the second control task, thereby minimizing the deterioration of component parts of the converter 20.

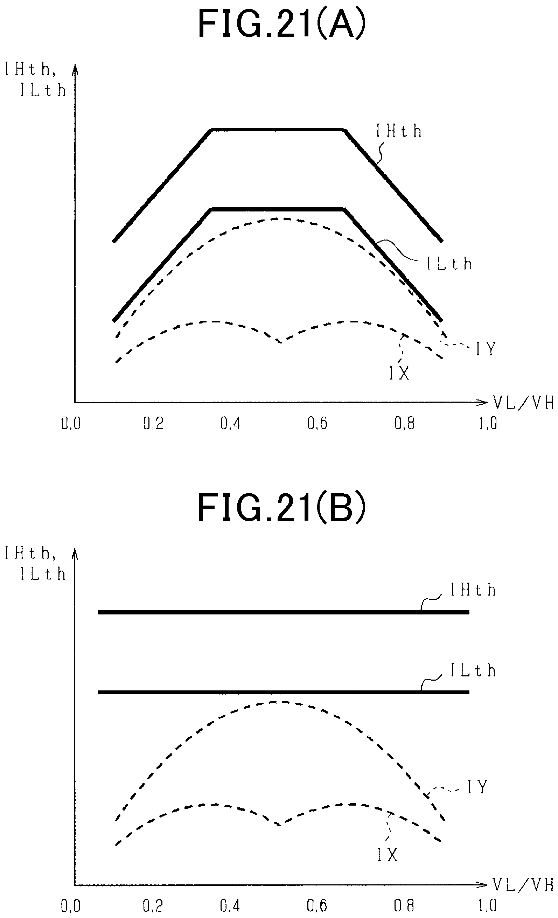

Figs. 21(A) and 21(B) represent relations of the upper threshold value *IHth* and the lower threshold value *ILth* to the inverse step-up ratio *VL*/*VH* in this embodiment. The lower threshold value *ILth* is set to be greater than the second reference value *IY*. The upper threshold value IHth is, like in the second embodiment, set to be greater than the first reference value *IX* by the range threshold *Wth*. The controller 40 may, as illustrated in Fig. 21(A), divide the range of 0<*VL*/*VH*<1.0 into a plurality of sections and determine each of the upper threshold value *IHth* and the lower threshold value *ILth* to be constant in each of the sections. Alternatively, the controller 40 may, as illustrated in Fig. 21(B), determine the upper threshold value *IHth* and the lower threshold value *ILth* to be constant in the range of 0<*VL*/*VH*≤1.0.

*OTHER EMBODIMENTS*

Each of the above embodiment may be modified in the following ways.

Electrical power generated by the converter 20 may be, as illustrated in Fig. 12, supplied to the electrical load 12 instead of the battery 11.

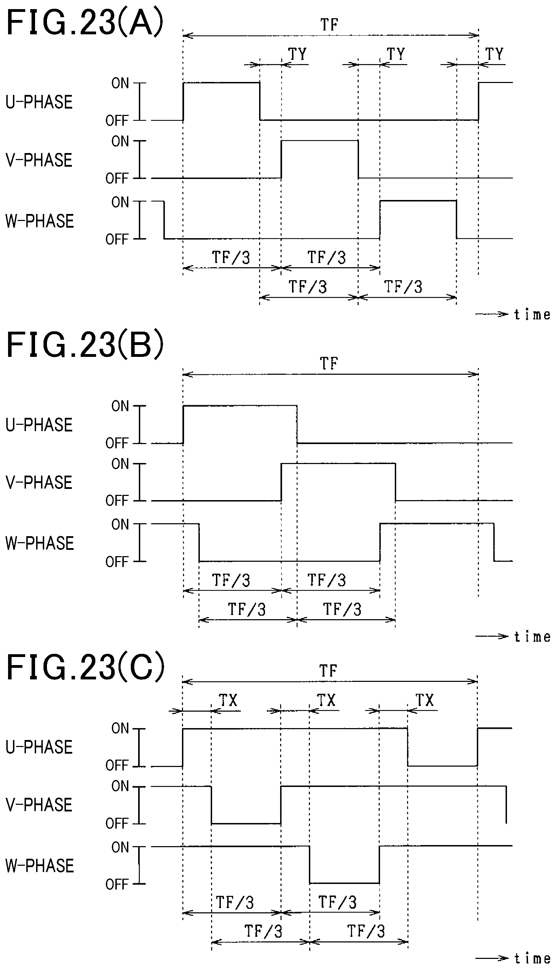

The converter 20 may be designed to have three or more step-up circuits. Figs. 23(A) to 24(B) demonstrate a case where the converter 20 includes three step-up circuits: a *U*-phase circuit, a *V*-phase circuit, and a *W*-phase circuit each of which is equipped with a switching device.

Figs. 23(A) to 23(C) demonstrate time-series changes in operation of the switching devices during execution of the first control task. Figs. 23(A) to 23(C) are different in the duty cycle *DT* from each other. The duty cycle *DT* is higher from Fig. 23(A) to Fig. 23(C). In each example, each of the *U*-phase, *V*-phase, and *W*-phase switching devices is placed in the on-state and then in the off-state each of which appears one time in the specified cycle *TF*. Times when the *U*-phase, *V*-phase, and *W*-phase switching devices are turned on are shifted from each other by *TF*/3. Similarly, times when the *U*-phase, *V*-phase, and *W*-phase switching devices are turned off are shifted from each other by *TF*/3. This causes a phase difference between two of the *U*-phase, *V*-phase, and *W*-phase switching devices to be 120°.

An all-on period in which all the *U*-phase, *V*-phase, and *W*-phase switching devices are turned on is defined as *TX*. An all-off period in which all the *U*-phase, *V*-phase, and *W*-phase switching devices are turned off is defined as *TY*. In the example of Fig. 23(A), there is only the all-off period *TY*. In the example of Fig. 23(B), there is neither the all-on period *TX* nor the all-off period *TY*. In the example of Fig. 23(C), there is only the all-on period *TX*. The controller 40 is, therefore, capable of controlling the on-off states of the *U*-phase, *V*-phase, and *W*-phase switching devices without at least one of the all-on period *TX* and the all-off period *TY* by controlling the duty cycle *DT* in the first control task.

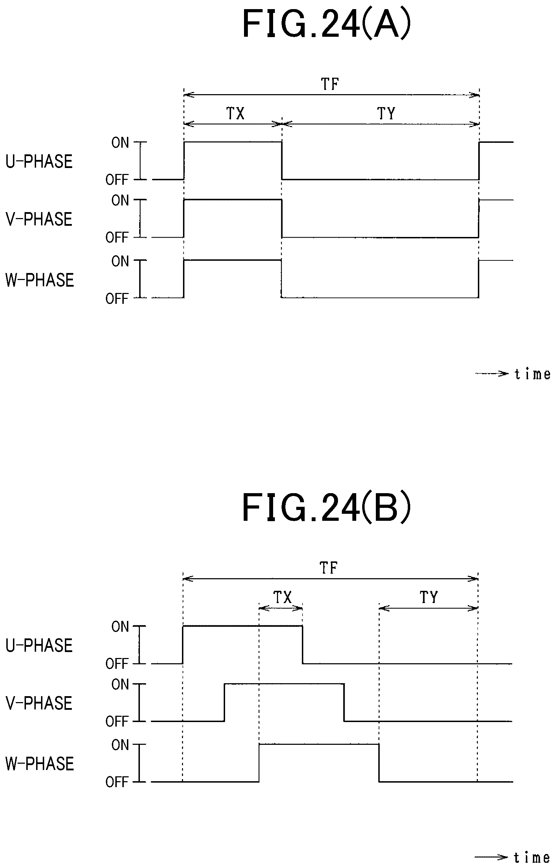

Figs. 24(A) and 24(B) show changes in operation of the *U*-phase, *V*-phase, and *W*-phase switching devices in the second control task. Fig. 24(A) represents changes in on-off operation of the *U*-phase, *V*-phase, and *W*-phase switching devices which are driven synchronously with each other. Fig. 24(B) represents changes in on-off operation of the *U*-phase, *V*-phase, and *W*-phase switching devices which are driven substantially synchronously with each other with small phase differences therebetween. In either example, each of the *U*-phase, *V*-phase, and *W*-phase switching devices is placed in the on-state and then in the off-state each of which appears one time in the specified cycle *TF*. There are both the all-on period *TX* and the all-off period *TY* in the second control task. The controller 40 is, therefore, capable of turning on or off the *U*-phase, *V*-phase, and *W*-phase switching devices to have both the all-on period *TX* and the all-off period *TY* in the second control task.

The converter 20 may alternatively designed to have switching devices working to perform synchronous rectification instead of the first and second diodes 23A and 23B.

The power supply 10 may alternatively be implemented by a charge and discharge secondary battery, such as a lithium-ion storage battery.

The converter 20 may be installed in a mobile object, such as a ship or an airplane instead of an automotive vehicle. The converter 20 may also be used with a stationary device, such as a manufacturing machine installed in a factory.

The controllers or how to construct them referred to in this disclosure may be realized by a special purpose computer which is equipped with a processor and a memory and programmed to execute one or a plurality of tasks created by computer-executed programs or alternatively established by a special purpose computer equipped with a processor made of one or a plurality of hardware logical circuits. The controllers or operations thereof referred to in this disclosure may alternatively be realized by a combination of an assembly of a processor with a memory which is programmed to perform one or a plurality of tasks and a processor made of one or a plurality of hardware logical circuits. Computer-executed programs may be stored as computer executed instructions in a non-transitory computer readable medium.

This disclosure is not limited to the above embodiments, but may be realized by various embodiments without departing from the purpose of the disclosure. This disclosure includes all possible combinations of the features of the above embodiments or features similar to the parts of the above embodiments. The structures in this disclosure may include only one or some of the features discussed in the above embodiments unless otherwise inconsistent with the aspects of this disclosure.

The above embodiments realize the following unique structures.

*FIRST STRUCTURE*

A control apparatus (40) is used for a DC-to-DC converter (20) which includes a plurality of reactors (22A, 22B) which are magnetically coupled with each other and switching devices (21A, 21B) each of which is connected to an end of a corresponding one of the reactors. The control apparatus comprises a switching controller which works to selectively perform a first control task and a second control task. The first control task is to control on-off states of the switching devices not to have at least one of an all-on period and an all-off period. The all-on period is a period of time in which all the switching devices are turned on. The all-off period is a period of time in which all the switching devices are turned off. The second control task is to control the on-off states of the switching devices to have both the all-on period and the all-off period. The switching controller works to change the first control task to the second control task before a current mode is switched from a continuous current mode to a discontinuous current mode.

*SECOND STRUCTURE*

The control apparatus, as set forth in the first structure, further comprises a determiner which determines whether the current mode is required to switch from the continuous current mode to the discontinuous current mode during execution of the first control task. When it is determined by the determiner that the current mode is required to change to the discontinuous current mode, the switching controller changes the first control task to the second control task in which the discontinuous current mode is entered.

*THIRD STRUCTURE*

The control apparatus, as set forth in the second structure, wherein the determiner determines whether the current mode is required to change from the discontinuous current mode to the continuous current mode during execution of the second control task. When it is determined by the determiner that the current mode is required to change to the discontinuous current mode, the switching controller changes the second control task to the first control task in which the continuous current mode is entered.

*FOURTH STRUCTURE*

The control apparatus, as set forth in the third structure, wherein when a time average of electrical current flowing through one of the reactors during execution of the first control task has dropped below a lower threshold value *(ILth)* during execution of the first control task, the determiner determines that the current mode is required to change from the continuous current mode to the discontinuous current mode. When a time average of electrical current flowing through one of the reactors during execution of the second control task has exceeded an upper threshold value *(IHth)*, the determiner determines that the current mode is required to change from the discontinuous current mode to the continuous current mode.

*FIFTH STRUCTURE*

The control apparatus, as set forth in the second structure, wherein when it is determined that after the current mode is changed from the discontinuous current mode to the continuous current mode, a time average of electrical current flowing through one of the reactors has exceeded a threshold value *(IHth)* during execution of the second control task, the switching controller changes the second control task to the first control task in which the current mode is switched to the continuous current mode.

*SIXTH STRUCTURE*

The control apparatus, as set forth in the first structure, further comprises a determiner which works to determine whether the current mode is required to change from the continuous current mode to the discontinuous current mode during execution of the first control task. When it is determined by the determiner that the current mode is required to be changed to the discontinuous current mode, the switching controller changes the first control task to the second control task in which the current mode is changed to the continuous current mode.

*SEVENTH STRUCTURE*

The control apparatus, as set forth in the sixth structure, wherein when a time average of electrical current flowing through one of the reactors during execution of the first control task has dropped below a lower threshold value *(ILth)* during execution of the first control task, the determiner determines that the current mode is required to change from the continuous current mode to the discontinuous current mode. When it is determined that a time average of electrical current flowing through one of the reactors during execution of the second control task has exceeded an upper threshold value *(IHth)* that is set greater than the lower threshold value, the switching controller changes the second control task to the first control task in which the current mode is switched to the continuous current mode.

*EIGHTH STRUCTURE*

The control apparatus as set forth in any one of the first, fifth, and seventh structures, wherein the time average of electrical current flowing through one of the reactors is a smallest one of time averages of electrical currents flowing through the reactors and command values used to create the time averages of electrical currents flowing through the reactors.

*NINTH STRUCTURE*

The control apparatus as set forth in any one of the first to seventh structure, wherein each of the reactors has a first end connecting with an input unit. Each of the switching devices connects with a second end of a corresponding one of the reactors. The DC-to-DC converter includes rectifiers (23A, 23B) provided one for each of the reactors. Each of the rectifiers connects between an output unit and the second end of a corresponding one of the reactors. Each of the rectifiers works to allow electrical current to flow from a corresponding one of the reactors to the output unit and block a flow of electrical current from the output unit to the one of the reactors.

*TENTH STRUCTURE*

The control apparatus as set forth in the ninth structure, wherein each of the switching devices is made of a semiconductor switching device equipped with a body diode (DA, DB).

*ELEVENTH STRUCTURE*

The control apparatus as set forth in the ninth or tenth structure, wherein the DC-to-DC converter includes the *N* reactors where *N* is an integer more than or equal to two. The first control task is to control on-off states of the switching devices to place each of the switching devices in an on-state and then in an off-state each of which appears one time in a specified cycle *(TF)*. Times when the switching devices are placed in the on-state are shifted by the specified cycle / *N* from each other. Times when the switching devices are placed in the off-state are shifted by the specified cycle / *N* from each other. The second control task is to control the on-off states of the switching devices to place each of the switching devices in the on-state and then in the off-state each of which appears one time in the specified cycle *(TF)* and to have both the all-on period and the all-off period.

*TWELFTH STRUCTURE*

A program for used with a DC-to-DC converter (20) which includes a plurality of reactors (22A, 22B), switching devices (21A, 21B) provided one for each of the reactors, and a computer (40a). The reactors are magnetically coupled with each other. Each of the switching devices is connected to an end of a corresponding one of the reactors. The program is executed by the computer to perform a switching operation on the switching devices in a selected one of a first control task and a second control task. The first control task is to control on-off states of the switching devices not to have at least one of an all-on period and an all-off period. The all-on period is a period of time in which all the switching devices are turned on. The all-off period is a period of time in which all the switching devices are turned off. The second control task is to control the on-off states of the switching devices to have both the all-on period and the all-off period. The switching operation is to change the first control task to the second control task before a current mode is switched from a continuous current mode to a discontinuous current mode.

**Claims**

1. A control apparatus (40) for a DC-to-DC converter (20) which includes a plurality of reactors (22A, 22B) which are magnetically coupled with each other and switching devices (21A, 21B) each of which is connected to an end of a corresponding one of the reactors, comprising:

   a switching controller which works to selectively perform a first control task and a second control task, wherein the first control task is to control on-off operations of the switching devices not to have at least one of an all-on period and an all-off period, the all-on period being a period of time in which all the switching devices are turned on, the all-off period being a period of time in which all the switching devices are turned off,
   the second control task is to control the on-off operations of the switching devices to have both the all-on period and the all-off period,
   the switching controller works to change the first control task to the second control task before a current mode is switched from a continuous current mode to a discontinuous current mode.

2. The control apparatus as set forth in claim 1, further comprising a determiner which determines whether the current mode is required to switch from the continuous current mode to the discontinuous current mode during execution of the first control task, and wherein
   when it is determined by the determiner that the current mode is required to change to the discontinuous current mode, the switching controller changes the first control task to the second control task in which the discontinuous current mode is entered.

3. The control apparatus as set forth in claim 2, wherein the determiner determines whether the current mode is required to change from the discontinuous current mode to the continuous current mode during execution of the second control task, and
   when it is determined by the determiner that the current mode is required to change to the discontinuous current mode, the switching controller changes the second control task to the first control task in which the continuous current mode is entered.

4. The control apparatus as set forth in claim 3, wherein when a time average of electrical current flowing through one of the reactors during execution of the first control task has dropped below a lower threshold value ($ILth$) during execution of the first control task, the determiner determines that the current mode is required to change from the continuous current mode to the discontinuous current mode, and wherein
   when a time average of electrical current flowing through one of the reactors during execution of the second control task has exceeded an upper threshold value ($IHth$), the determiner determines that the current mode is required to change from the discontinuous current mode to the continuous current mode.

5. The control apparatus as set forth in claim 2, wherein when it is determined that after the current mode is changed from the discontinuous current mode to the continuous current mode, a time average of electrical current flowing through one of the reactors has exceeded a threshold value ($IHth$) during execution of the second control task, the switching controller changes the second control task to the first control task in which the current mode is switched to the continuous current mode.

6. The control apparatus as set forth in claim 1, further comprising a determiner which works to determine whether the current mode is required to change from the continuous current mode to the discontinuous current mode during execution of the first control task, and wherein
   when it is determined by the determiner that the current mode is required to be changed to the discontinuous current mode, the switching controller changes the first control task to the second control task in which the current mode is changed to the continuous current mode.

7. The control apparatus as set forth in claim 6, wherein when a time average of electrical current flowing through one of the reactors during execution of the first control task has dropped below a lower threshold value *(ILth)* during execution of the first control task, the determiner determines that the current mode is required to change from the continuous current mode to the discontinuous current mode, and wherein

when it is determined that a time average of electrical current flowing through one of the reactors during execution of the second control task has exceeded an upper threshold value *(IHth)* that is set greater than the lower threshold value, the switching controller changes the second control task to the first control task in which the current mode is switched to the continuous current mode.

8. The control apparatus as set forth in any one of claims 4, 5, and 7, wherein the time average of electrical current flowing through one of the reactors is a smallest one of time averages of electrical currents flowing through the reactors and command values used to create the time averages of electrical currents flowing through the reactors.

9. The control apparatus as set forth in any one of claims 1 to 7, wherein each of the reactors has a first end connecting with an input unit,

each of the switching devices connects with a second end of a corresponding one of the reactors,
the DC-to-DC converter includes rectifiers (23A, 23B) provided one for each of the reactors, each of the rectifiers connecting between an output unit and the second end of a corresponding one of the reactors,
each of the rectifiers works to allow electrical current to flow from a corresponding one of the reactors to the output unit and block a flow of electrical current from the output unit to the one of the reactors.

10. The control apparatus as set forth in claim 9, wherein each of the switching devices is made of a semiconductor switching device equipped with a body diode (DA, DB).

11. The control apparatus as set forth in claim 9, wherein the DC-to-DC converter includes the N reactors where N is an integer more than or equal to two,

the first control task is to control on-off operations of the switching devices to place each of the switching devices in an on-state and then in an off-state each of which appears one time in a specified cycle ($TF$), times when the switching devices are placed in the on-state being shifted by the specified cycle / $N$ from each other, times when the switching devices are placed in the off-state being shifted by the specified cycle / $N$ from each other,
the second control task is to control the on-off operations of the switching devices to place each of the switching devices in the on-state and then in the off-state each of which appears one time in the specified cycle ($TF$) and to have both the all-on period and the all-off period.

12. A program for used with a DC-to-DC converter (20) which includes a plurality of reactors (22A, 22B), switching devices (21A, 21B) provided one for each of the reactors, and a computer (40a), the reactors being magnetically coupled with each other, each of the switching devices being connected to an end of a corresponding one of the reactors, the program being executed by the computer to perform a switching operation on the switching devices in a selected one of a first control task and a second control task,

the first control task is to control on-off operations of the switching devices not to have at least one of an all-on period and an all-off period, the all-on period being a period of time in which all the switching devices are turned on, the all-off period being a period of time in which all the switching devices are turned off,
the second control task is to control the on-off operations of the switching devices to have both the all-on period and the all-off period,
the switching operation is to change the first control task to the second control task before a current mode is switched from a continuous current mode to a discontinuous current mode.

# FIG.1

# FIG.2

FIG.2(A) 21A ON/OFF

FIG.2(B) 21B ON/OFF

FIG.2(C) IAr, IBr

# FIG.3

# FIG.4

# FIG.5

START

↓

OBTAIN VLd AND VHd — S10

↓

CALCULATE IHth AND ILth — S11

↓

CALCULATE IAav AND IBav — S12

↓

S13
IAav, IBav > IHth ?  —— YES

NO ↓

S15
IAav, IBav < ILth ?  —— YES →

NO ↓

S16
SWITCH FIRST CONTROL TASK TO SECOND CONTROL TASK

S14
SWITCH SECOND CONTROL TASK TO FIRST CONTROL TASK

↓

END

# FIG.6(A)

# FIG.6(B)

# FIG.6(C)

1st CONTROL TASK DT≦0.5

FIG.7(A)  IAr, IBr

FIG.7(B)  21A   ON / OFF

FIG.7(C)  21B   ON / OFF

time

1st CONTROL TASK DT＞0.5

FIG.8(A)  IAr, IBr

FIG.8(B)  21A   ON / OFF

FIG.8(C)  21B   ON / OFF

time

2nd CONTROL TASK

FIG.9(A)  IAr, IBr

FIG.9(B)  21A   ON / OFF

FIG.9(C)  21B   ON / OFF

time

21

# FIG.10

IHth,
ILth

IHth=IY

ILth=IX

VL/VH

0.0  0.2  0.4  0.6  0.8  1.0

# FIG.11

VL/VH=0.5

WH

YA

1st CONTROL TASK

DCM                                                    CCM

YB

YD

2nd CONTROL TASK

DCM                                                    CCM

0      ILth        YC        IHth            IAav, IBav

# FIG.12

DT

0

DCM IN
2nd CONTROL MODE

CCM IN 1st
CONTROL MODE

IAav, IBav

# FIG.13(A)

COMPARATIVE EXAMPLE

IAav, IBav

IAref, IBref

IAav, IBav

time

# FIG.13(B)

THIS EMBODIMENT

IAav, IBav

t11

IAref, IBref

IAav, IBav

time

# FIG.14(A)

# FIG.14(B)

## FIG.15

```
        START
          │
          ▼  S10
OBTAIN VLd AND VHd
          │
          ▼  S11
CALCULATE IHth AND ILth
          │
          ▼  S20
OBTAIN IAref AND IBref
          │
          ▼  S21
   IAref, IBref > IHth ?  ──YES──┐
          │ NO                    │
          ▼  S22                  ▼  S14
YES──  IAref, IBref < ILth ?   SWITCH SECOND CONTROL TASK
 │         │ NO                  TO FIRST CONTROL TASK
 ▼ S16     │                       │
SWITCH FIRST CONTROL TASK          │
TO SECOND CONTROL TASK             │
 │         │                       │
 └─────────▼───────────────────────┘
          END
```

## FIG.16

```
        START
          │
          ▼  S10
OBTAIN VLd AND VHd
          │
          ▼  S11
CALCULATE IHth AND ILth
          │
          ▼  S12
CALCULATE IAav AND IBav
          │
          ▼  S20
OBTAIN IAref AND IBref
          │
          ▼  S30
IAav, IBav, IAref, IBref > IHth ? ──YES──┐
          │ NO                            │
          ▼  S31                          ▼  S14
YES── IAav, IBav, IAref, IBref < ILth ? SWITCH SECOND CONTROL TASK
 │         │ NO                          TO FIRST CONTROL TASK
 ▼ S16     │                               │
SWITCH FIRST CONTROL TASK                  │
TO SECOND CONTROL TASK                     │
 │         │                               │
 └─────────▼───────────────────────────────┘
          END
```

# FIG.17

# FIG.18

FIG.19(A)

FIG.19(B)

FIG.19(C)

# FIG.20

# FIG.21(A)

# FIG.21(B)

# FIG.22

FIG.23(A)

FIG.23(B)

FIG.23(C)

# FIG.24(A)

# FIG.24(B)

## INTERNATIONAL SEARCH REPORT

International application No.

**PCT/JP2023/007868**

**A.    CLASSIFICATION OF SUBJECT MATTER**

*H02M 3/155*(2006.01)i

FI:    H02M3/155 W; H02M3/155 H

According to International Patent Classification (IPC) or to both national classification and IPC

**B.    FIELDS SEARCHED**

Minimum documentation searched (classification system followed by classification symbols)

H02M3/155

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 6667747 B1 (MITSUBISHI ELECTRIC CORP.) 18 March 2020 (2020-03-18) entire text, all drawings | 1-12 |
| A | JP 2016-092854 A (DENSO CORP.) 23 May 2016 (2016-05-23) entire text, all drawings | 1-12 |
| A | JP 2019-103284 A (MEIDENSHA CORP.) 24 June 2019 (2019-06-24) entire text, all drawings | 1-12 |
| A | US 2010/0148741 A1 (GREEN SOLUTION TECHNOLOGY CO., LTD.) 17 June 2010 (2010-06-17) entire text, all drawings | 1-12 |

☐ Further documents are listed in the continuation of Box C.        ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/007868**

| Patent document cited in search report | | | Publication date (day/month/year) | Patent family member(s) | | | Publication date (day/month/year) |
|---|---|---|---|---|---|---|---|
| JP | 6667747 | B1 | 18 March 2020 | US | 2022/0239231 | A1 | |
| | | | | entire text, all drawings | | | |
| | | | | WO | 2021/001888 | A1 | |
| | | | | EP | 3996263 | A1 | |
| JP | 2016-092854 | A | 23 May 2016 | (Family: none) | | | |
| JP | 2019-103284 | A | 24 June 2019 | (Family: none) | | | |
| US | 2010/0148741 | A1 | 17 June 2010 | TW | 201025806 | A | |
| | | | | TW | 201029483 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022060067 A

- WO 2020095432 A1